Europäisches Patentamt

European Patent Office

Office européen des brevets

(11) Publication number: **0 142 270**
**B1**

(19)

## (12) EUROPEAN PATENT SPECIFICATION

(45) Date of publication of patent specification: **27.01.88**

(51) Int. Cl.⁴: **G 01 K 11/14**

(21) Application number: **84306944.4**

(22) Date of filing: **11.10.84**

(54) **Optical fibre thermometer and method of measuring temperature.**

(30) Priority: **18.10.83 IT 954083**

(43) Date of publication of application:
**22.05.85 Bulletin 85/21**

(45) Publication of the grant of the patent:
**27.01.88 Bulletin 88/04**

(84) Designated Contracting States:
**DE FR GB**

(56) References cited:
**EP-A-0 006 530**
**US-A-4 288 159**

**MONATSHEFTE FÜR CHEMIE, vol.107, 1976, pages 271-281, Springer Verlag, DE; K.SONE et al.: "Bemerkungen über Thermochromie von Kobalt(II)-chloridlösungen in organischen Medien, 1.Mitt."**

(73) Proprietor: **CONSIGLIO NAZIONALE DELLE RICERCHE**
**Piazzale Aldo Moro, 7**
**I-00198 Roma (IT)**

(72) Inventor: **Mignani, Anna Grazia**
**Via Arnolfo 15**
**Firenze (IT)**
Inventor: **Scheggi Verga, Anna Maria**
**Via Trieste 20**
**Firenze (IT)**
Inventor: **Bacci, Mauro**
**Via Galliano 142**
**Firenze (IT)**
Inventor: **Brenci, Massimo**
**Via L. B. Alberti 6**
**Pistoia (IT)**
Inventor: **Conforti, Giuliano**
**Via Dei Caboto 59/1**
**Firenze (IT)**
Inventor: **Falciai, Riccardo**
**Via Donizetti 100**
**Campi Bisenzio (Firenze) (IT)**

(74) Representative: **Knott, Stephen Gilbert et al**
**MATHISEN, MACARA & CO. The Coach House**
**6-8 Swakeleys Road**
**Ickenham Uxbridge Middlesex UB10 8BZ (GB)**

Courier Press, Leamington Spa, England.

## Description

The present invention relates to an optical-fibre thermometer, and to a method of measuring temperature using the thermometer.

Optical fibre thermometers with temperature sensors based on various principles have already been proposed. Thermometers of this type lend themselves particularly to remote measuring in hostile or difficult-access surroundings. Compared with more conventional devices, such as thermistors, thermocouples and the like, they have the advantage of being completely enclosed in a dielectric material, and as such are insensitive to electro-magnetic fields. This is found to be necessary for example for taking measurements in appliances subject to high tension (lines, transformers and other appliances) or in particular applications in which use is made of microwave heating, such as industrial applications, biomedical applications (hyperthermia), and so on.

For example, EP—A1—0006530 discloses an optical fibre thermometer having an end probe, an input optical fibre for conveying light from a source to the end probe, and an output optical fibre for conveying light from the end probe to electro-optical means for detecting temperature, wherein the end probe contains a thermochromic substance whose light absorption varies with temperature over a first wavelength range and remains substantially constant with temperature over a second wavelength range, and wherein the electro-optical means responds to light transmitted through the thermochromic substance and through the output optical fibre to detect the absorption of the first wavelength range relative to the second wavelength range, and to produce a signal indicative of the said relative absorption.

The thermochromic substance proposed in this document is in the form of a solid, amorphous or crystalline material which is fixed to the end face of the input and output optical fibre or fibres. US—A—4288159 discloses a similar form of optical temperature transducer in which a solid temperature dependent light absorbing mass including randomly oriented and distributed reflecting chips or grains is fixed to the end of an optical fibre conductor.

Optical fibre thermometers of the above type exploit the known phenomenon of thermochromism, that is the property of a substance whereby its optical absorption spectrum varies as a function of its temperature, and as a result of detecting the relative absorption in the two different wavelength ranges the thermometer is not adversely affected by any fluctuations in the optical characteristics of parts of the thermometer external to the sensor and probe, such as the light source.

However, one problem with the known thermometers of this type is that they are not capable of accurate temperature measurements at relatively short intervals due to the tendency of the thermochromic substance to exhibit a degree of hysteresis. Furthermore, they are also not as sensitive as may be required in many circumstances.

The aim of the present invention is to provide an improved optical fibre thermometer of the general construction referred to above in relation to EP—A1—0006530, and in particular by improving the sensitivity, response, and stability of the thermometer.

To this end, such an optical fibre thermometer is characterised in that the thermochromic substance is a liquid and the end probe comprises a specular reflector part which reflects light of the said first and second wavelength ranges whereby light from the input optical fibre is transmitted through the liquid thermochromic substance, is reflected by the specular reflected part, and is transmitted again through the liquid thermochromic substance to the output optical fibre for passage to the electro-optical means for detecting the temperature.

Preferably the liquid thermochromic substance is a salt solution, and for a temperature range of from 25°C to 60°C a solution of cobalt chloride in isopropyl alcohol has been found to be particularly suitable.

The invention also resides in a method of measuring temperature characterised by using an optical fibre thermometer in accordance with the invention, and wherein light is transmitted through the liquid thermochromic substance within the end probe from the input optical fibre to the output optical fibre via the specular reflector part, and the relative absorption of the light therein is detected in two discrete wavebands, in only one of which the thermochromic substance exhibits a thermochromic effect.

Thermochromism in liquids, including cobalt salt solutions, is itself known from, for example, K. Sone et al, Monatshefte fur Chemie, Vol. 107, 1976 pages 271—281; J. H. Day, Chem. Rev. 68 (1968) 649; and W. C. Nieuwpoort et al, Rec. Trav. Chim. Pays-Bas 85 (1966) 397, but hitherto there has been no suggestion or appreciation that such a liquid thermochromic substance could be used in the manner of the present invention and with such advantages.

The invention will be better understood from the following description of a preferred embodiment, by way of example only, with reference to the accompanying schematic drawings, in which:

Figure 1 is a diagram of a fibre-optic thermometer;

Figure 2 shows a possible construction of the temperature sensor of the thermometer of Figure 1;

Figure 3 shows a temperature sensor and beam divider of an alternative form of thermometer;

Figure 4 is an absorption diagram as a function of wavelength of light transmitted through a thermochromic liquid used in the thermometer of Figure 1 or 3; and

Figure 5 is a graph showing the relationship between the thermometer output and the temperature being measured, for the thermometers of Figure 1 and 3.

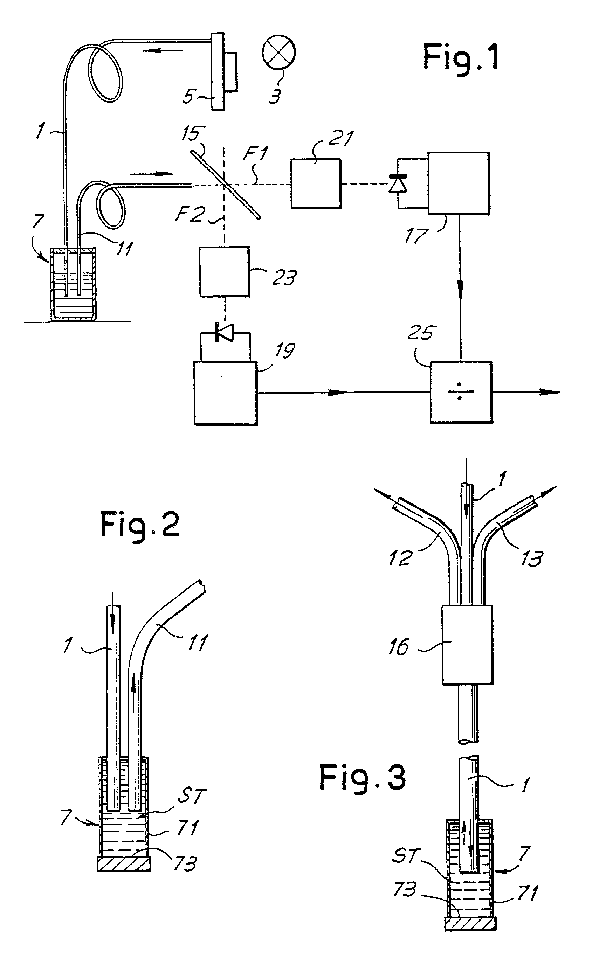

As shown in Figure 1, a thermometer has an optical fibre 1 which carries light through a chopper 5 from a wide band source 3, such as a halogen lamp, or from two sources (LED's) of different wavelengths, or from lamps with linear emission, right into the inside of a probe 7 containing a thermochromic solution. The light may be of any suitable wavelength, not necessarily visible. The probe 7 may be made, for example, using a capillary of glass 71 (Fig.2) or other material with a diameter of the order of 1 to 2 mm, sealed and made specular at its end part 73 opposite the input of the optical fibre, and containing the thermochromic solution ST. The light, attenuated by the solution ST and reflected by the end part 73, is collected by another fibre 11 (Fig.2) and despatched to a beam-splitter 15 from which two beams F1 and F2 emerge. Alternatively, the light, attenuated by the solution ST and reflected by the end part 73, is taken by the same fibre 1 (Fig.3) and, through a star coupler 16 (or other divider), divided into two beams F1 and F2 issuing from fibres 12 and 13. The two beams F1 and F2 are sent to respective photodetectors 17 and 19, which are photodiodes or similar devices, after having been filtered at two separate and specific wavelengths by respective filters 21 and 23 of different values. The values obtained from the two detectors 17 and 19 are despatched to a processor 25 which compares them, and which advantageously processes them to supply directly a value representative of the measured temperature.

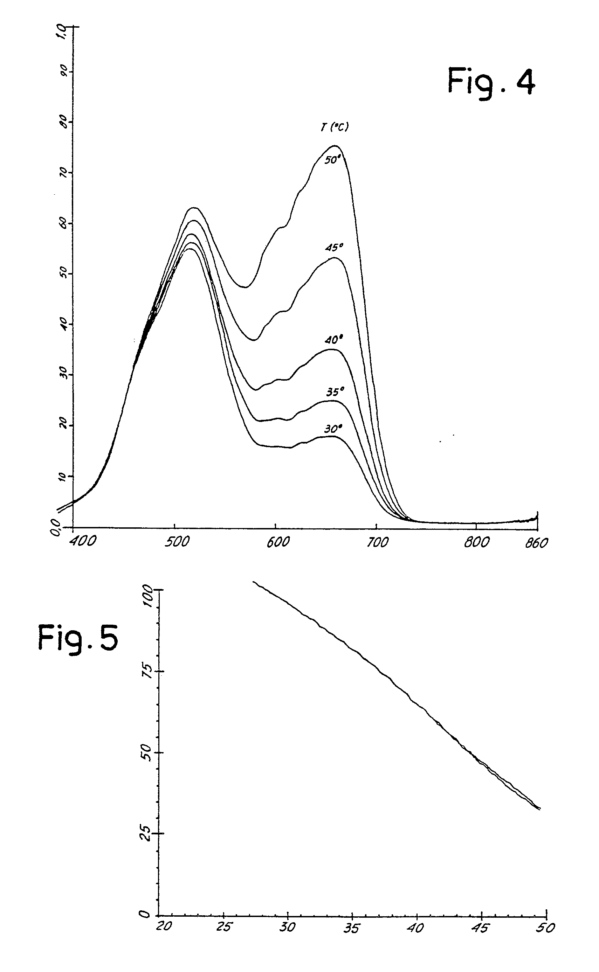

Depending on the temperature range concerned, the type of solution, and correspondingly the wavelengths selected by the two filters, are chosen accordingly. For the temperature range of interest in biomedicine (from 30°C to 50°C) it is appropriate to use a solution of cobalt halides $(CoCl_2.6H_2O)$ in a mixture of isopropyl alcohol and water. The absorption spectra of such a solution are given in Figure 4 where the graphs are plotted with wavelength in nanometres along the abscissae and absorption (unity signifying total absorption) along the ordinates, each graph corresponding to a different temperature. In the range 740 to 850 nm, light absorption by the solution remains constant as temperature changes, while the greatest variation with temperature occurs around the absorption peak of 660 nm. In the case analysed, the two filters 21, 23 which are narrowband interferometers are selected to transmit respectively a first band centered on the absorption peak (measurement channel), and a second band centered on a wavelength within the range 740 to 850 nm (reference channel). With a view to eliminating the influence of the fluctuations common to the two channels a calculation is made of the ratio between the detected signals relating to the two channels. The measurements are thus independent, in particular, of any fluctuations of the source 3 and of the losses through the curvature of the optical fibres.

The signal provided by the processor 25 is subsequently processed and displayed.

The response of the thermometer constructed is shown in Figure 5 which is a graph of reference temperature along the abscissa, against the resulting ratio, along the ordinate. The processing done by the processor 25 optionally corrects for the slight non-linearity of the response, using conventional calibration methods.

Because of the possibility of using several probes employing thermochromic substances different from cobalt halides, the thermometer under consideration may cover a fairly wide temperature range to suit various applications, such as the monitoring of electric, electronic or mechanical equipment, microwave ovens, etc.

By virtue of the reduced dimensions to which the thermometer may be made, it is suitable also for medical applications, such as e.g. measuring blood temperature inside arteries or hyperthermia of various natures. In the case of medical applications in particular it is necessary to make as miniaturised a probe as possible, to be able to take local temperature measurements and to limit trauma in the body.

## Claims

1. An optical fibre thermometer having an end probe (7), an input optical fibre (1) for conveying light from a source (3) to the end probe (7), and an output optical fibre (1; 11) for conveying light from the end probe to electro-optical means (15 or 16, 17, 19, 21, 23, 25) for detecting temperature, wherein the end probe (7) contains a thermochromic substance (ST) whose light absorption varies with temperature over a first wavelength range and remains substantially constant with temperature over a second wavelength range; and wherein the electro-optical means responds to light transmitted through the thermochromic substance (ST) and through the output optical fibre (1; 11) to detect the absorption of the first wavelength range relative to the second wavelength range, and to produce a signal indicative of the said relative absorption, characterised in that the thermochromic substance (ST) is a liquid and the end probe (7) comprises a specular reflector part (73) which reflects light of both the said wavelength ranges whereby light from the input optical fibre (1) is transmitted through the liquid thermochromic substance (ST), is reflected by the specular reflector part (73), and is transmitted again through the liquid thermochromic substance (ST) to the output optical fibre (1; 11) for passage to the electro-optical means (15 or 16, 17, 19, 21, 23, 25).

2. A thermometer according to claim 1, wherein the thermochromic substance is a salt solution.

3. A thermometer according to claim 2, wherein the thermochromic substance is cobalt chloride in isopropyl alcohol, and the thermometer is adapted for the temperature range between 25°C and 60°C.

4. A thermometer according to any one of the preceding claims, wherein the end probe comprises a capillary tube (7), which receives the input and output optical fibre (1, 11) through one end and is fitted with the specular reflector part (73) at the opposite end.

5. A method of measuring temperature characterised by using an optical fibre thermometer according to any one of the preceding claims, and wherein light is transmitted through the liquid thermochromic substance (ST) within the probe (7) from the input optical fibre to the output optical fibre via the specular relector part, and the relative absorption of the light therein is detected in two discrete wavebands, in only one of which the substance exhibits a thermochromic effect.

## Patentansprüche

1. Ein fiberoptisches Thermometer mit Fühlerkopf (7), faseroptischen Lichtverbindung (1) von Quelle (3) zum Fühlerkopf (7) und faseroptischen Lichtverbindung (1; 11) vom Fühlerkopf zu einem elektrooptischen Temperaturmeßfühler (15 oder 16, 17, 19, 21, 23, 25), wobei Fühlerkopf (7) eine thermochromische Substanz (ST) enthält, deren Lichtabsorption über einen ersten Wellenlängenbereich temperaturabhängig schwankt und über einen zweiten Wellenlängenbereich mit der Temperatur im wesentlichen konstant bleibt; und wobei der elektrooptische Meßfühler auf das durch die thermochromische Substanz (ST) und die faseroptische Lichtverbindung (1; 11) übertragene Licht anspricht, um die Absorption des ersten Wellenlängenbereichs im Verhältnis zum zweiten Wellenlängenbereich festzustellen und durch ein Signal zu kennzeichnen. Zu den Kennzeichen gehören, daß die thermochromische Substanz (ST) eine Flüssigkeit ist und der Fühlerkopf (7) einen Spiegelreflektor (73) enthält, der das Licht der beiden besagten Wellenlängenbereiche reflektiert, so daß Licht von der faseroptischen Lichtverbindung (1) durch die flüssige thermochromische Substanz (ST) übertragen, von Spiegelreflektor (73) reflektiert und wieder durch die flüssige thermochromische Substanz (ST) zur faseroptischen Lichtverbindung (1; 11) zwecks Weiterleitung an den elektrooptischen Meßfühler (15 oder 16, 17, 19, 21, 23, 25) übertragen wird.

2. Ein Thermometer entsprechend Anspruch 1, bei dem die thermochromische Substanz aus einer Salzlösung besteht.

3. Ein Thermometer entsprechend Anspruch 2, bei dem die thermochromische Substanz aus Kobaltchlorid in Isopropylalkohol besteht, wobei das Thermometer für den Temperaturbereich von 25°C bis 60°C ausgelegt ist.

4. Ein Thermometer entsprechend vorstehenden Ansprüchen, wobei der Fühlerkopf für die Aufnahme der faseroptischen Lichtverbindungen (1, 11) an einem Ende ein Kapillarröhrchen (7) aufweist, an dessen gegenüberliegendem Ende Spiegelreflektor (73) angeordnet ist.

5. Eine durch den Gebrauch eines faseroptischen Thermometers entsprechend vorstehenden Ansprüchen gekennzeichnete Temperaturmeßmethode, bei der die Lichtübertragung von der faseroptischen Zuleitung durch die flüssige thermochromische Substanz (ST) in Fühlerkopf (7) über den Spiegelreflektor zur faseroptischen Ableitung erfolgt und die relative Lichtabsorption mit Hilfe von zwei diskreten Wellenbändern festgestellt wird, wobei die Substanz eine thermochromische Wirkung in nur einem Wellenband entwickelt.

## Revendications

1. Thermomètre à fibres optiques doté d'une sonde terminale (7), d'une fibre optique (1) d'entrée pour la transmission de la lumière à partir d'une source (3) vers la sonde terminale (7) et d'une fibre optique (1:11) de sortie pour la transmission de la lumière de la sonde terminale vers des moyens (15 ou 16, 17, 19, 21, 23, 25) électro-optiques pour la détection de la température, dans lequel la sonde terminale (7) contient une substance thermochromique (ST) dont l'absorption de lumière varie d'après la température sur une première bande de longueurs d'ondes et reste essentiellement constante avec la température sur une deuxième bande de longueurs d'ondes; et dans lequel les moyens électro-optiques réagissent à la lumière transmise au travers de la substance thermochromique (ST) et par l'intermédiaire de la fibre optique de sortie (1; 11) pour détecter l'absorption de la première bande de longueurs d'ondes par rapport à la deuxième bande de longueurs d'ondes, et pour produire un signal indicateur de ladite absorption relative, caractérisé en ce que la substance thermochromique (ST) est un liquide et la sonde terminale (7) comprend un élement réflecteur spéculaire (73) qui reflète la lumière des deux dites bandes de longueurs d'ondes, par lequel moyen la lumière de la fibre optique d'entrée (1) est transmise par la substance thermochromique (ST) liquide, est réfléchie par l'élément réflecteur spéculaire (73) et est retransmise par la substance thermochromique (ST) liquide vers la fibre optique de sortie (1; 11) pour passer aux moyens électro-optiques (15 ou 16, 17, 18, 19, 21, 23, 25).

2. Thermomètre selon la revendication 1, caractérisé on ce que la substance thermochromique est une solution saline.

3. Thermomètre selon la revendication 2, caractérisé on ce que la substance thermochromique est du chlorure de cobalt dans de l'alcool isopropylique, et en ce que le thermomètre est étalonné pour la gamme de températures de 25°C à 60°C.

4. Thermomètre selon l'une quelconque des revendications précédentes, caractérisé en ce que la sonde terminale comprend un tube capillaire (7) qui reçoit la fibre optique d'entrée et de sortie (1; 11) par une extrémité et est doté de l'élément réflecteur spéculaire (73) à l'extrémité opposée.

5. Méthode de mesure de la température caractérisée par l'emploi d'un thermomètre à fibres optiques selon l'une quelconque des revendications précédentes, et selon laquelle la lumière est transmise par la substance thermochromique liquide (ST) endéans de la sonde (7) à partir de la fibre optique d'entrée vers la fibre optique de sortie par l'intermédiaire de l'élément réflecteur spéculaire, et l'absorption relative de la lumière dans le dispositif est détectée en deux bandes discrètes de longueurs d'ondes, la substance ne présentant un effet thermochromique que dans l'une des deux bandes.

Fig.1

Fig.2

Fig.3

Fig. 4

Fig. 5